# FASCICULE DE BREVET EUROPEEN

(11) **EP 0 347 487 B1**
(45) Date de publication et mention de la délivrance du brevet: **07.01.1993**
(21) Numéro de dépôt: 88110121.6
(22) Date de dépôt: 24.06.1988
(51) Int. Cl.: C12G 1/02

(54) **Appareil de pigeage**
Tresteruntertaucheinrichtung
Pomace-submerging device

(43) Date de publication de la demande: 27.12.1989
(73) Titulaire: SOCIETE NOUVELLE DES CONSTRUCTIONS SOUDEES DU COTEAU, F-42120 Le Coteau (FR); CAVE DES VIGNERONS DE BUXY, Société Coopérative Agricole, F-71390 Buxy (FR)
(72) Inventeur: Jacquet, Xavier, F-42120 Le Coteau (FR); Rageot, Roger, F-71390 Buxy (FR)
(74) Mandataire: Casalonga, Axel

(56) Documents cités:
- CH-A- 548 927
- FR-A- 1 316 517
- US-A- 3 179 264
- US-A- 3 308 994

## Description

L'invention concerne l'industrie vinicole, et plus particulièrement l'opération de "foulage" ou "pigeage" du chapeau de marc au cours d'une vinification en rouge.

Le vin est une boisson résultant de la fermentation du raisin frais. Le vin rouge est obtenu par fermentation du moût de raisins rouges avec leurs peaux, leurs pépins et, le cas échéant, tout ou partie de la rafle qui est l'armature ligneuse de la grappe. La fermentation provoque la transformation du sucre du raisin en alcool éthylique, en gaz carbonique et en produits secondaires, ceci sous l'action des levures. Les sucres fermentescibles et l'eau se trouvent essentiellement dans la pulpe du raisin tandis que les produits qui donnent naissance à la couleur et aux arômes se localisent dans la peau des grains. Au cours de la cuvaison, le gaz carbonique qui se dégage du moût en fermentation soulève les parties solides et les entraîne en surface sous forme de "chapeau".

Cette séparation des phases solides et liquide du moût a pour inconvénients principaux : une hétérogénéité de températures de fermentation, une aération excessive du chapeau risquant de développer de mauvais ferments, et surtout une mauvaise dilution des principes aromatiques et colorants.

Pour éviter ces défauts, on utilise habituellement les procédés suivants :
- Foulage aux pieds ou à la pige : ce procédé, le plus ancien, consiste à refouler aux pieds le chapeau dans le moût. Il est peu employé en raison du danger que présente pour les opérateurs le dégagement de gaz carbonique. Il a été remplacé par le foulage au moyen d'une perche munie d'un disque ou d'une crosse enfoncée manuellement dans le chapeau. La manoeuvre de ces perches dites "piges" ou "pigeous" est difficile, pénible et le foulage ou "pigeage" est souvent incomplet.
- Immersion du chapeau : l'immersion du chapeau dans le moût peut être réalisée, soit en permanence pendant toute la fermentation au moyen de claies, grilles ou similaires, soit de temps en temps par action de pistons ou de râteaux intégrés dans la cuve, soit par mouvements imprimés à la cuve elle-même, tels que la mise en rotation ou le basculement de cuves horizontales.

Ces procédés présentent les inconvénients d'intégrer à l'intérieur des cuves des dispositifs spécifiques fixes, onéreux et difficiles à nettoyer, d'effectuer une action sur le chapeau sans possibilité de contrôle visuel, ou encore de nécessiter une forme particulière de cuves les rendant difficilement utilisables pour une autre fonction que la fermentation proprement dite.

Le but de l'invention est d'éliminer les inconvénients précédents en permettant un pigeage du chapeau marc depuis l'extérieur d'une cuve de façon complète, contrôlable et régulable au moyen d'un appareil non intégré à la cuve.

Pour cela, l'appareil de pigeage selon l'invention comporte un outil de pigeage fixé à l'extrémité d'une tige, avec des moyens commandés pour assurer le déplacement de cette tige dans les trois dimensions, ces moyens étant portés par un support susceptible d'être immobilisé par rapport à une cuve pour effectuer sur celle-ci l'opération de pigeage, puis d'être libéré et déplacé de cette cuve à une autre cuve.

L'outil de pigeage peut avantageusement être conique ou biconique, et ladite tige est de préférence la tige d'un vérin pigeur assurant les mouvements de va-et-vient dans le sens axial pour faire pénétrer l'outil pigeur dans le chapeau de marc et l'en extraire.

Ledit support porte de préférence un bras, mobile en rotation autour d'un axe vertical, ce bras portant à son tour le vérin pigeur d'une manière mobile en rotation ou en translation dans un plan vertical radial.

D'autres particularités de l'invention apparaîtront dans la description qui va suivre de deux modes de réalisation pris comme exemples et représentés sur le dessin annexé, sur lequel :
la figure 1 est une vue en élévation et en coupe partielle d'un premier mode de réalisation; et
la figure 2 est une vue similaire d'un deuxième mode de réalisation.

L'outil pigeur 1 peut être un disque lenticulaire dont les deux faces sont coniques et convexes, symétriques ou non, les cônes assurant une bonne pénétration dans le chapeau de marc à la descente et à la remontée. Il peut également, comme dans les exemples représentés, être constitué par un simple cône, convexe sur sa face supérieure et concave sur sa face inférieure, cette dernière assurant un effet de succion du jus lors de la remontée de l'outil. Naturellement, d'autres formes pourraient également être envisagées.

Cet outil pigeur 1 est monté, de préférence par un raccordement démontable 2, à une tige 3, qui peut avantageusement être la tige d'un vérin pigeur 4 permettant d'assurer les mouvements de va-et-vient dans le sens axial de la tige 3 et de l'outil 1, afin de faire pénétrer l'outil pigeur dans le chapeau de marc 5 et de l'en extraire.

Ce vérin pigeur 4 assure donc le mouvement principal de refoulement vers l'intérieur de la cuve 6 du chapeau de marc 5, et il doit être combiné avec deux autres mouvements pour permettre d'opérer en divers points de la surface horizontale du chapeau 5.

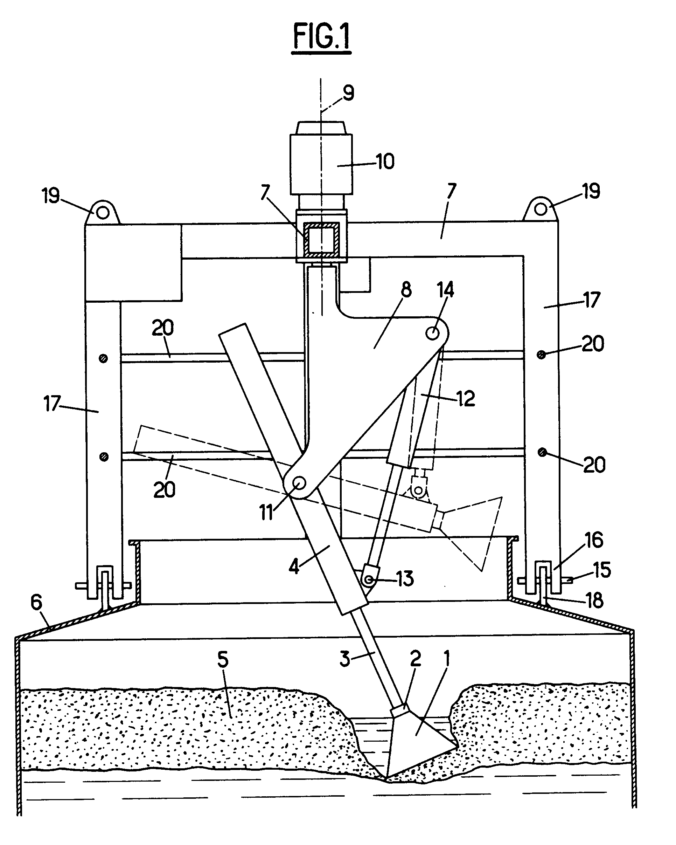

Pour cela, dans le premier mode de réalisation de la figure 1, l'appareil comporte un support 7, en forme de portique double en croix; susceptible d'être fixé de manière amovible sur la cuve 6, ce support comportant un bras 8, mobile en rotation, grâce à un moto-réducteur approprié 10, autour d'un axe vertical 9 coaxial à la cuve 6. En outre, une extrémité du bras 8 porte le corps du vérin pigeur 4 par l'intermédiaire d'un axe d'articulation 11 perpendiculaire au plan de l'axe 9 et du bras 8, de manière que le vérin 4 ainsi que sa tige 3 puissent se déplacer dans un plan vertical radial passant par l'axe 9. Les mouvements de basculement de ce vérin 4 dans ce plan autour de l'articulation 11 sont commandés par un vérin de commande radiale 12, articulé en 13 sur le corps 4 du vérin pigeur et en 14 sur l'extrémité du bras 8 opposée à l'articulation 11.

La combinaison de ce mouvement de basculement dans le plan radial et de rotation de ce plan radial autour de l'axe 9 permet donc effectivement d'atteindre tous les points du chapeau 5 afin d'y faire plonger l'outil pigeur 1.

Dans le mode de réalisation particulier de la figure 1, le portique 7 est fixé de manière amovible sur la cuve 6 au moyen de broches 15 traversant des chapes 16 situées à l'extrémité inférieure de chacun des quatre montants 17 du portique 7, et des oreilles de fixation 18 soudées sur le dessus de la cuve. D'autre part, le portique 7 comporte également à son extrémité supérieure des oreilles d'élinguage 19 permettant, après libération du portique par retrait des broches 15, de déplacer celui-ci d'une cuve à une autre à l'aide d'un engin de levage conventionnel non représenté.

Par ailleurs, les quatre montants 17 sont de préférence entretoisés par des barres horizontales 20, droites ou courbes, servant à la fois d'entretoises et de rambardes.

Lorsque le pigeage n'est pas en cours, le vérin de pigeage 4 peut avantageusement être rétracté et relevé dans la position représentée en traits interrompus sur la figure 1, afin de le dégager du chapeau de marc. Cette position facilite en outre le transfert d'une cuve à une autre.

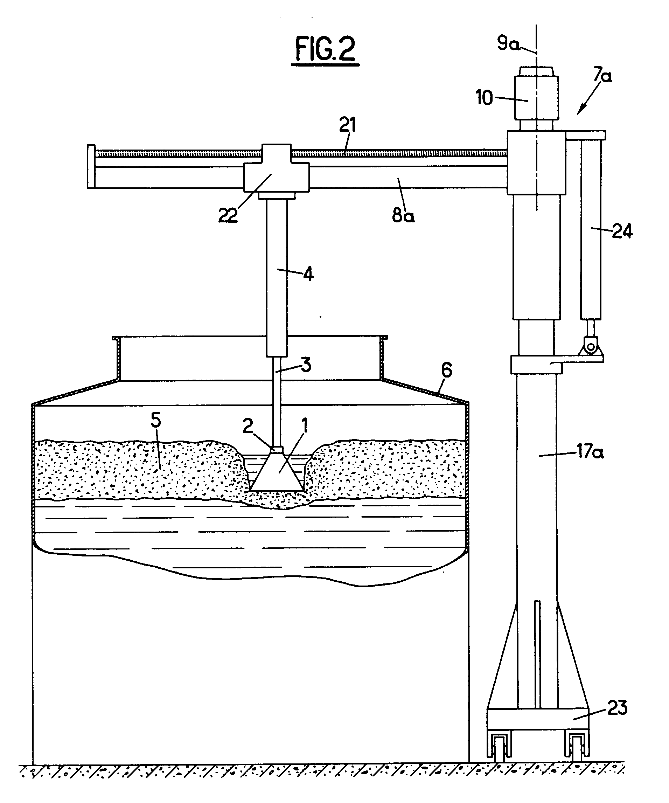

Dans le mode de réalisation de la figure 2, le support 7a est en forme de potence, avec un montant unique 17a et un bras 8a en porte-à-faux, ce bras 8a étant toujours mobile en rotation autour d'un axe vertical 9a, lequel dans ce cas n'est pas coaxial à la cuve comme dans le cas précédent, mais en position latérale.

Le vérin pigeur 4 se déplace dans un plan vertical radial passant par cet axe 9a, mais dans ce cas, ce déplacement est un déplacement en translation le long du bras 8a. Pour cela, on utilise, dans l'exemple représenté, à la place du vérin de déplacement radial 12 précédent, une vis 21, entraînée par un moteur approprié, et entraînant un chariot 22 qui coulisse le long du bras 8a et qui porte rigidement la base du corps 4 du vérin pigeur.

Pour faciliter le mouvement de l'appareil d'une cuve à une autre, le montant 17a du support 7a est de préférence porté par un chariot 23 pouvant rouler sur le sol, sur des rails, ou sur une passerelle surélevée parcourant par exemple un alignement de cuves. Un moyen de freinage ou de blocage non représenté permet d'immobiliser le chariot 23 et le support 17a en regard de chaque cuve 6 et de l'en libérer.

En outre, pour faciliter le dégagement de l'outil lors du transfert de cuve à cuve, tout en évitant une course exagérée pour le vérin pigeur 4, le montant 17a du support peut avantageusement être lui-même télescopique dans le sens vertical et actionné par un vérin auxiliaire 24 qui est manoeuvré en extension lors du transfert ou de la mise au repos de l'appareil. Cette dernière disposition permet en outre d'adapter très rapidement l'appareil à diverses hauteurs de cuves si nécessaire.

Dans les deux modes de réalisation, les vérins et les moto-réducteurs sont alimentés par une centrale hydraulique et un coffret électrique de commande qui peuvent être actionnés manuellement par un observateur plus ou moins éloigné de la cuve. Mais ils peuvent également être commandés par un programmateur automatique à partir de données préenregistrées assurant non seulement la cinématique complète des divers mouvements, mais également le réglage de l'amplitude, la fréquence et la durée des diverses opérations, en vue d'un fonctionnement périodique automatique sans surveillance.

## Revendications

1. Appareil de pigeage du chapeau de marc (5) à l'intérieur d'une série de cuves de vinification (6), caractérisé par le fait qu'il comporte un outil de pigeage (1) fixé à l'extrémité d'une tige (3) avec des moyens commandés (4,10,12;4,24,10,21) pour assurer le déplacement de cette tige dans les trois dimensions, ces moyens étant portés par un support (7,7a) susceptible d'être immobilisé par rapport à une cuve (6) pour effectuer sur celle-ci l'opération de pigeage, puis d'être libéré et déplacé de cette cuve à une autre cuve.

2. Appareil selon la revendication 1, caractérisé par le fait qu'au moins la face supérieure de l'outil pigeur (1) est conique convexe, sa face inférieure pouvant être conique convexe ou concave.

3. Appareil de pigeage selon une des revendications précédentes, caractérisé par le fait que ladite tige est la tige (3) d'un vérin pigeur (4) assurant les mouvements de va-et-vient dans le sens axial pour faire pénétrer l'outil pigeur (1) dans le chapeau de marc (5) et l'en extraire.

4. Appareil selon une des revendications précédentes, caractérisé par le fait que ledit support (7,7a) porte un bras (8,8a), mobile en rotation autour d'un axe vertical (9,9a), ce bras portant à son tour le vérin pigeur (4) d'une manière mobile en rotation ou en translation dans un plan vertical radial.

5. Appareil selon la revendication 4, caractérisé par le fait que ledit axe vertical (9) est coaxial à la cuve, et que ledit support (7) est en forme de portique s'appuyant sur la périphérie de la cuve.

6. Appareil selon la revendication 4, caractérisé par le fait que ledit axe vertical (9a) est en position latérale à la cuve et que le support (7a) est en forme de potence.

7. Appareil selon une des revendications précédentes, caractérisé par le fait que ledit support (7) est agencé pour pouvoir être fixé de manière facilement amovible sur chaque cuve (6), et pour être transporté après libération par un engin de levage.

8. Appareil selon une des revendications 1 à 6, caractérisé par le fait que le support (7a) est porté par un chariot (23) se déplaçant sur le sol, sur des rails ou sur une passerelle pour passer de la proximité d'une cuve à une autre, ce chariot comportant des moyens de freinage ou de blocage dans ses positions de travail.

## Claims

1. Apparatus for pressing the marc head (5) inside a succession of vinification vats (6), characterised in that it comprises a pressing tool (1) attached to the end of a rod (3) with controlled means (4, 10, 12; 4, 24, 10, 21) for ensuring the three-dimensional movement of this rod, these means being carried by a support (7, 7a) capable of being immobilised relative to a vat (6) in order to carry out the pressing operation in this vat and then released and moved from this vat to another vat.

2. Apparatus according to claim 1, characterised in that at least the upper surface of the pressing tool (1) is conical and convex, while its lower surface can be conical and convex or concave.

3. Pressing apparatus according to one of the preceding claims, characterised in that the said rod is the rod (3) of a pressing jack (4) ensuring to-and-fro movements in the axial direction for causing the pressing tool (1) to enter the marc head (5) and to remove it therefrom.

4. Apparatus according to one of the preceding claims, characterised in that the said support (7, 7a) carries an arm (8, 8a) which can be moved for rotation around a vertical axis (9, 9a), this arm in turn carrying the pressing jack (4) in such a way that it can be moved for rotation or translational motion in a radial, vertical plane.

5. Apparatus according to claim 4, characterised in that the vertical axis (9) is coaxial with the vat, and in that the said support (7) is in the form of a gantry resting on the periphery of the vat.

6. Apparatus according to claim 4, characterised in that the said vertical axis (9a) is in a lateral position relative to the vat and in that the support (7a) is in the form of a bracket.

7. Apparatus according to one of the preceding claims, characterised in that the said support (7) is arranged so that it can be attached in an easily removable manner to each vat (6), and so that it can be transported after release by a hoist.

8. Apparatus according to one of claims 1 to 6, characterised in that the support (7a) is carried by a carriage (23) moving along on the ground, on rails or on a bridge so that it can pass from the region of one vat to another, this carriage comprising means for braking or locking in its working positions.

## Patentansprüche

1. Vorrichtung zum Untertauchen der Tresterhaube (5) im Inneren einer Reihe von Gärbottichen (6) zur Weinbereitung, dadurch gekennzeichnet, daß sie ein Tauchwerkzeug (1) umfaßt, welches am Ende einer Stange (3) befestigt ist, wobei die Stange Mittel (4, 10, 12; 4, 24, 10, 21) aufweist, welche so gesteuert sind, daß sie die Verstellung dieser Stange in den drei Dimensionen ermöglichen, wobei diese Mittel von einer Trageeinrichtung (7, 7a) gehalten werden, die bezüglich eines Gärbottichs (6) fixiert zu werden vermag, um auf diesem den Tauchvorgang durchzuführen, und welche dann wieder freigegeben und von diesem Gärbottich zu einem anderen bewegt zu werden vermag.

2. Vorrichtung nach Anspruch 1, dadurch gekennzeichnet, daß mindestens die Oberseite des Tauchwerkzeugs (1) konisch konvex ist, während seine Unterseite konisch konvex oder konkav sein kann.

3. Vorrichtung zum Untertauchen nach einem der vorangehenden Ansprüche, dadurch gekennzeichnet, daß die genannte Stange die Stange (3) eines Tauch-Stellantriebes (4) ist, welcher die hin- und hergehenden Bewegungen in Axialrichtung ermöglicht, um das Tauchwerkzeug (1) in die Tresterhaube (5) eintreten zu lassen und sie aus ihr herauszuziehen.

4. Vorrichtung nach einem der vorangehenden Ansprüche, dadurch gekennzeichnet, daß die genannte Trageeinrichtung (7, 7a) einen Arm (8, 8a) trägt, welcher um eine vertikale Achse (9, 9a) drehbeweglich ist, wobei dieser Arm seinerseits den Tauch-Stellantrieb (4) in einer Weise trägt, daß er drehbeweglich oder in einer vertikalen Radialebene längsbeweglich ist.

5. Vorrichtung nach Anspruch 4, dadurch gekennzeichnet, daß die genannte Vertikalachse (9) koaxial zu dem Gärbottich ist und daß die genannte Trageeinrichtung (7) sich in Portalform auf dem Umfang des Gärbottichs abstützt.

6. Vorrichtung nach Anspruch 4, dadurch gekennzeichnet, daß die genannte Vertikalachse (9a) sich in einer seitlichen Position zu dem Gärbottich befindet und daß die Trageeinrichtung (7a) die Form eines Auslegers besitzt.

7. Vorrichtung nach einem der vorangehenden Ansprüche, dadurch gekennzeichnet, daß die genannte Trageeinrichtung (7) so ausgestattet ist, daß sie auf jedem Gärbottich (6) in einer leicht lösbaren Weise fixierbar ist und daß sie nach der Freisetzung durch ein Hebezeug transportierbar ist.

8. Vorrichtung nach einem der Ansprüche 1 bis 6, dadurch gekennzeichnet, daß die Trageeinrichtung (7a) von einem Wagen (23) getragen ist, welcher sich auf dem Boden, auf Schienen oder auf einem Laufsteg bewegt, um von der Annäherung an einen Gärbottich zu einem anderen zu gelangen, wobei dieser Wagen Mittel zur Abbremsung oder zur Blockierung in seinen Arbeitspositionen aufweist.
